# EUROPÄISCHE PATENTSCHRIFT

(11) **EP 2 466 571 B1**
(45) Veröffentlichungstag und Bekanntmachung des Hinweises auf die Patenterteilung: **14.10.2015**
(21) Anmeldenummer: 10191681.5
(22) Anmeldetag: 18.11.2010
(51) Int. Cl.: G09B 23/28, A61C 13/00, A61C 11/00

(54) **Übungsmodell**
Practice model
Modèle d'entraînement

(43) Veröffentlichungstag der Anmeldung: 20.06.2012
(73) Patentinhaber: Franz Sachs GmbH & Co. KG, 88069 Tettnang (DE)
(72) Erfinder: Woidschützke, Horst, 88239, Wangen (DE)
(74) Vertreter: Riebling, Peter

(56) Entgegenhaltungen:
- EP-A1- 1 970 878
- Anonymous: "RANGE OF PRODUCTS 2010 | 2011", , 22. Februar 2011 (2011-02-22), Seiten 1-7, XP002637895, Gefunden im Internet: URL:www.kleedoc.com/de/files/frasaco.pdf [gefunden am 2011-05-19]
- Dr. Shabeel: "frasaco typodont jaws and teeth: accessories for ANA-4", , 21. Oktober 2010 (2010-10-21), Seiten 1-5, XP002637896, Gefunden im Internet: URL:http://frasacotypodont.blogspot.com/20 10/10/accessories-for-ana-4.html [gefunden am 2011-05-19]

## Beschreibung

Die Erfindung bezieht sich auf ein Übungsmodell zur Erlernung von zahnmedizinischen Fertigkeiten nach dem Oberbegriff des Patentanspruches 1.

Aus der EP 1 970 878 A1 kann ein solches Übungsmodell entnommen werden, das sich in der Praxis bewährt hat. Die einzelnen Lehrzähne weisen an ihrer der Schale zugewandten Unterseite eine Gewindebohrung auf, in die eine Schraube eingedreht werden kann, die die Trägerplatte und die Schale durchgreift, so dass die Lehrzähne an der Trägerplatte und damit an der Schale fest montiert sind. Beim Auswechseln der Lehrzähne ist die jeweilige Schraube zu lösen, so dass anschließend die Lehrzähne aus der Durchgangsöffnung der Schale und aus der Trägerplatte entfernt werden können.

Als nachteilig bei diesem Stand der Technik hat sich herausgestellt, dass es äußerst umständlich und zeitaufwändig ist, die einzelnen Lehrzähne mit einer Schraube in der Trägerplatte zu befestigen. Darüber hinaus ist oftmals die Schale und auch die Trägerplatte an einem Phantomkopf oder einem Artikulator angebracht, so dass die Unterseite der Schale und der Trägerplatte nicht oder nur sehr schwer zugänglich sind, um die Schrauben zu erreichen und aufdrehen zu können.

Mit der Druckschrift "Range of Products 2010/2011" der Firma Frasaco wird ein Übungsmodell zur Erlernung von zahnmedizinischen Fertigkeiten offenbart. Unter der Artikelnummer ANKA-4 und unter der Artikelnummer ANKA-4V ist zwar ein Klick-System beschrieben, jedoch ohne dass weitere Einzelheiten aus dieser Druckschrift zu entnehmen sind.

Aus der DE 103 93 483 T5 ist ein Modellzahn zur Zahnheilkundeübung und eine Vorrichtung zur Zahnheilkundeübung mit befestigtem Modellzahn zu entnehmen. Der jeweilige Modellzahn wird dabei in eine Aussparung, die in der Trägerplatte eingearbeitet ist, eingesteckt. An dem der Trägerplatte zugewandten Zahnstumpf ist ein kegelstumpfartiger Kopf angeformt, dessen Außendurchmesser größer bemessen ist als die Durchgangsbohrung in der Trägerplatte. Beim Einschieben des Zahnstumpfes in die Trägerplatte werden daher die Durchgangsbohrungen aufgeweitet, so dass der Zahnstumpf mit Kraft in die Trägerplatte eingeführt werden kann. Die Durchgangsöffnung weist einen Absatz auf, der dem Kopf des Zahnstumpfes zugewandt ist und an dem dieser im montierten Zustand anliegt. Wenn der Zahn aus der Trägerplatte entfernt werden soll, ist dieser mit manueller Kraft entgegen der Vorspannkraft der Trägerplatte aus der Durchgangsöffnung herauszuziehen. Die Durchgangsöffnung weitet sich somit auf und verformt sich demnach elastisch.

Solche Befestigungsmöglichkeiten nach diesem Stand der Technik haben sich in der Praxis nicht bewährt, denn die Fixierung des Lehrzahns ist in der jeweiligen Durchgangsöffnung äußerst fehlerbehaftet, denn bereits bei einem geringen Spiel des Zahnstumpfes in der Trägerplatte bzw. in deren Durchgangsöffnung wackelt der Lehrzahn. Dies führt bei den zahnmedizinischen Übungen zu erheblichen Fehlern und entspricht nicht der Realität eines menschlichen oder tierischen Zahns in einem Kiefer.

Darüber hinaus leiert die Durchgangsöffnung aus, wenn mehrfach Zähne ein- und ausgeführt werden, denn durch die elastische Verformung weitet sich die Durchgangsöffnung, so dass das Spiel des Lehrzahns in der Durchgangsöffnung nach mehrfachem Ein- und Ausführen des Lehrzahns in der Durchgangsöffnung erhöht ist. Ferner fehlt dieser Fixiermöglichkeit die erforderliche Steifigkeit zur Halterung des Lehrzahnes, da sich bereits bei geringen Kräften die Durchgangsöffnung verformt und der Lehrzahn verrutscht. Dies führt zu einer Übungs-Simulation, die den realen Verhältnissen nicht oder unzureichend entspricht

Es ist daher Aufgabe der Erfindung ein Übungsmodell der eingangs genannten Gattung derart weiterzubilden, dass jeder Lehrzahn in dem Übungsmodell zuverlässig und dauerhaft gehalten ist, dass die Vielzahl der Lehrzähne möglichst gleichzeitig in das Übungsmodell einsteckbar bzw. aus diesem entfernbar sind, ohne dass hierfür für jeden einzelnen Lehrzahn eine individuelle Befestigung zu lösen bzw. festzuziehen ist und dass gleichzeitig der Lehrzahn ohne Spiel an der Trägerplatte des Übungsmodells im montierten Zustand gehalten ist, um die zahnmedizinischen Übungen möglichst identisch den tatsächlichen menschlichen oder tierischen Kiefern nachzubilden.

Diese Aufgaben werden erfindungsgemäß durch die Merkmale des Patentanspruches 1 gelöst.

Weitere vorteilhafte Weiterbildungen der Erfindung ergeben sich aus den Unteransprüchen.

Dadurch, dass die Halteleiste relativ zu der Trägerplatte axial zu dieser verschiebbar gehalten ist und dadurch, dass die Lehrzähne mittels ihrer Halteglieder in Aufnahmekammern der Zapfen eingesteckt sind, ist gewährleistet, dass beim Verschieben der Halteleiste sämtliche Zapfen nach innen zusammengedrückt sind, so dass sich der Durchmesser der Aufnahmekammer, insbesondere der Durchmesser der Aufnahmetasche, in der der Kopf des Haltegliedes im montierten Zustand positioniert ist, zusammengedrückt ist. Folglich entsteht eine lösbare Presspassung und die Lehrzähne sind zuverlässig in dem jeweiligen Zapfen arretiert.

Aufgrund der in Umfangsrichtung einwirkenden Presskraft sind die Lehrzähne in dem Zapfen der Trageplatte fest positioniert, so dass diese bei zahnmedizinischen Übungen nicht wackeln oder aus ihrer Lage verrutschen und somit geeignete Kräfte zur Zahnbehandlung ausgeübt werden können.

Sobald die Lehrzähne ihren Übungszweck erfüllt haben, können diese durch Verschieben der Halteleiste gemeinsam oder einzeln aus der Aufnahmekammer des jeweiligen Zapfen herausgezogen werden, so dass auf schnelle und einfache Art und Weise die Lehrzähne in dem Übungsmodell ausgetauscht werden können.

Darüber hinaus unterliegt die Aufnahmekammer, insbesondere der Einführkanal, keinerlei Verschleiß aufgrund von elastischen Verformungen beim Herausziehen bzw. Hereindrücken des Lehrzahnes, denn in den Zapfen ist ein Schlitz eingearbeitet, dessen Tiefe an die Länge des Einführkanals angepasst ist, so dass die Wand des Zapfens im Bereich des Schlitzes elastisch verformt ist und nachdem der größer bemessene Kopf des Lehrzahnes den Einführkanal verlassen hat, federnd in die Ausgangslage zurück überführt ist. Durch die in der Halteleiste eingearbeiteten Öffnungen werden zudem die Zapfen fixiert und zusammengedrückt, so dass selbst bei einem bestimmten Verschleiß des Zapfens sichergestellt ist, dass die Lehrzähne zuverlässig in der Aufnahmekammer des Zapfens gehalten sind, denn die Zapfen werden von den Öffnungen vollständig oder nahezu vollständig umgriffen, so dass diese nicht nach außen elastisch verformbar sind.

In der Zeichnung ist ein erfindungsgemäßes Ausführungsbeispiel dargestellt, das nachfolgend näher erläutert ist. Im Einzelnen zeigt:
- Figur 1: ein Übungsmodell, bestehend aus einer Schale und einer an dieser angebrachten Trägerplatte, zwischen denen eine Halteleiste axial verschiebbar angeordnet ist, und aus einer Vielzahl von Lehrzähnen, die in der Schale durch die Halteleiste und die Trägerplatte fixiert sind, in Explosionsdarstellung,
- Figur 2: das Übungsmodell gemäß Figur 1 im zusammengebauten Zustand, in perspektivischer Ansicht,
- Figur 3a: das Übungsmodell gemäß Figur 2 entlang der Schnittlinie III-III, in einem Ausgangszustand zum Ein- oder Ausführen des Lehrzahns,
- Figur 3b: das Übungsmodell gemäß Figur 3a in Draufsicht und ausschnittsweise und
- Figur 4: das Übungsmodell gemäß Figur 3, bei dem die Halteleiste in Richtung des Lehrzahns zu dessen Fixierung verschoben ist.

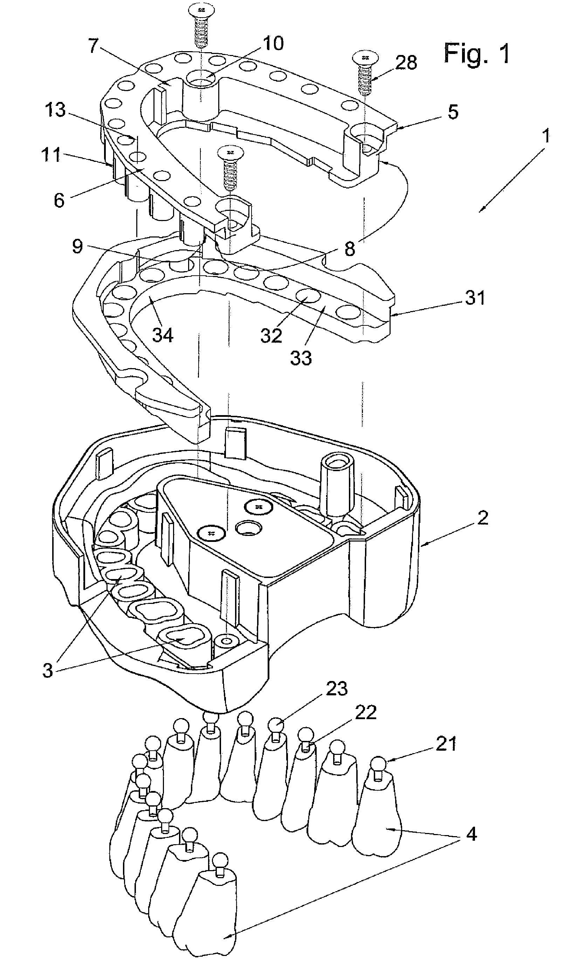

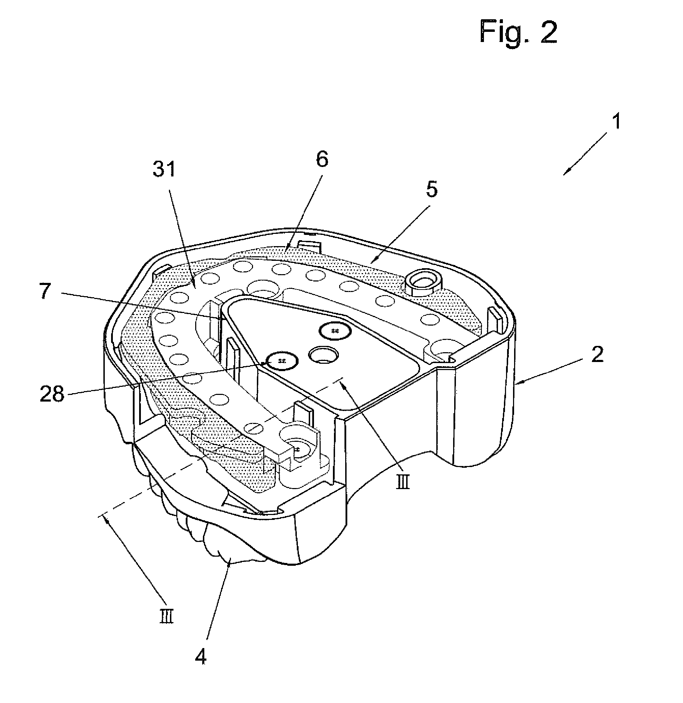

Den Figuren 1 und 2 ist ein Übungsmodell 1 zu entnehmen, das insbesondere für Studierende der Zahnmedizin zur Erlernung von zahnmedizinischen Fertigkeiten verwendet werden kann. Das Übungsmodell kann jedoch auch einem tierischen Kiefer nachempfunden sein, so dass Tiermediziner ähnliche veterinärmedizinische Übungen durchführen könne.

Das Übungsmodell 1 besteht aus einer Schale 2, in die eine Vielzahl von Durchgangsöffnungen 3 eingearbeitet sind. Die Innenkonturen der Durchgangsöffnungen 3 sind dabei an die Außenkonturen von Lehrzähnen 4 angepasst, denn die Lehrzähne 4 werden im montierten Zustand in die jeweilige Durchgangsöffnung 3 eingeführt und sollen durch die Seitenwand der Durchgangsöffnung 3 seitlich abgestützt sein.

Um die Lehrzähne 4 in der Durchgangsöffnung 3 zu fixieren, ist eine Trägerplatte 5 vorgesehen, die auf der gegenüberliegenden Seite der Schale 2 bezogen auf die Position der Lehrzähne 4 angeordnet ist.

Die Trägerplatte 5 besteht aus einem Boden 6 und einem mit dem Boden 6 fest verbundenen Bogen 7, der hufeisen- oder U-förmig ausgestaltet ist. Die Schale 2 ist derart gefertigt, dass die Trägerplatte 5 in diese eingesetzt werden kann; die Konturen der Schale 2 und der Trägerplatte 5 korrespondieren folglich miteinander.

An dem Boden 6 der Trägerplatte 5 sind eine Vielzahl von Zapfen 11 angeformt, die in Richtung der Schale 2 senkrecht an der Trägerplatte 5 abstehen. In jede der Zapfen 11 ist eine Aufnahmekammer 12 eingearbeitet, deren Längsachse 13 senkrecht zu dem Boden 6 ausgerichtet ist. Die Aufnahmekammer 12 weist einen Einführkanal 15 und eine kugelförmig ausgestaltete Aufnahmetasche 16 auf. Der Innendurchmesser des Einführkanals 15 ist wesentlich kleiner bemessen als der Durchmesser der Aufnahmetasche 16.

Darüber hinaus sind in die Wände der jeweiligen Zapfen 11 zwei zueinander gegenüberliegende Schlitze 14 eingearbeitet, die parallel zu der Längsachse 13 verlaufen. Die Tiefe der Schlitze 14 entspricht dabei der Länge des Einführkanal 15 oder ist etwas kürzer bemessen.

Die Lehrzähne 4 sind üblicherweise aus Kunststoff gefertigt. Um nunmehr die Lehrzähne 4 in die Aufnahmekammer 12 des jeweiligen Zapfens 11 einführen und dort fixieren zu können, sind an den Lehrzähnen 4 Halteglieder 21 vorgesehen, die aus einem Steg 22 und aus einem kugel- oder birnenförmigen Kopf 23 bestehen. Sowohl der Steg 22 als auch der Kopf 23 sind aus einem metallischen Werkstoff hergestellt und bilden eine Baueinheit.

Die Außenkontur des Steges 22 ist wesentlich kleiner bemessen als die Außenkontur des Kopfes 23. Der Steg 22 weist an dem dem Kopf 23 gegenüberliegenden Ende ein nicht dargestelltes Gewinde auf, das in eine in den Lehrzahn 4 eingearbeitete Gewindebohrung eingedreht ist, so dass dadurch der Steg 22 fest mit dem Lehrzahn 4 verbunden ist.

Wird nunmehr der jeweilige Lehrzahn 4 in die Schale 2 positioniert, durchgreift der Steg 22 und der Kopf 23 die Durchgangsöffnung 3 der Schale 2 und ragt aus dieser in Richtung der Trägerplatte 5 hinaus. Die Zapfen 11 sind derart positioniert, dass die in diese eingearbeitete Aufnahmekammer 12 jeweils fluchtend einem der Köpfe 23 des Lehrzahns 4 zugewandt sind. Folglich kann jeder Kopf 23 in eine der Aufnahmekammern 12 eingeschoben werden.

Da der Außendurchmesser des Kopfes 23 wesentlich größer bemessen ist als die Breite des Einführkanals 15, weitet sich der Einführkanal 15 auf. Da in diesen ein oder mehrere Schlitze 14 eingearbeitet sind, entsteht eine elastische Verformung, die federnde Eigenschaften aufweist. Sobald nämlich der Kopf 23 in die Aufnahmetasche 16 eingeschoben ist, federt die Wand des Zapfens 11 im Bereich des Einführkanals 15 in die Ausgangsposition zurück.

Da durch diese konstruktive Ausgestaltung und durch die Positionierung des Kopfes 23 in der Aufnahmetasche 16 noch keine zuverlässige Fixierung des Lehrzahns 4 an der Trägerplatte 5 erreicht ist - denn die Lehrzähne 4 können mittels manueller Kraft ohne weiteres aus der Aufnahmekammer 12 herausgezogen werden - ist eine Halteleiste 31 vorzusehen, durch die die Aufweitung der jeweiligen Zapfen 11 im Bereich des Einführkanals 15 und der Aufnahmetasche 16 ausgeschlossen ist.

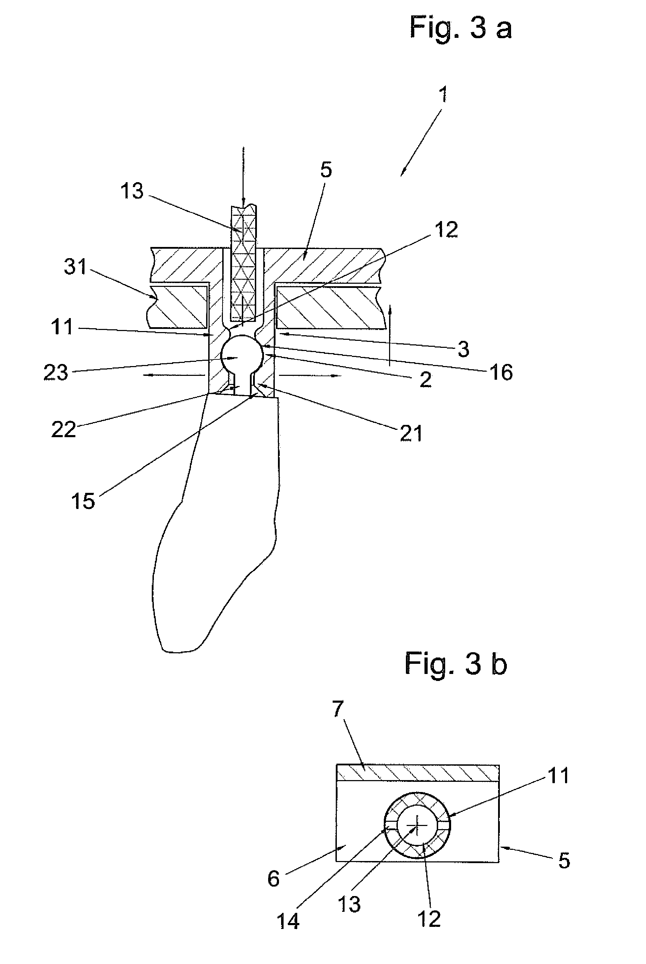

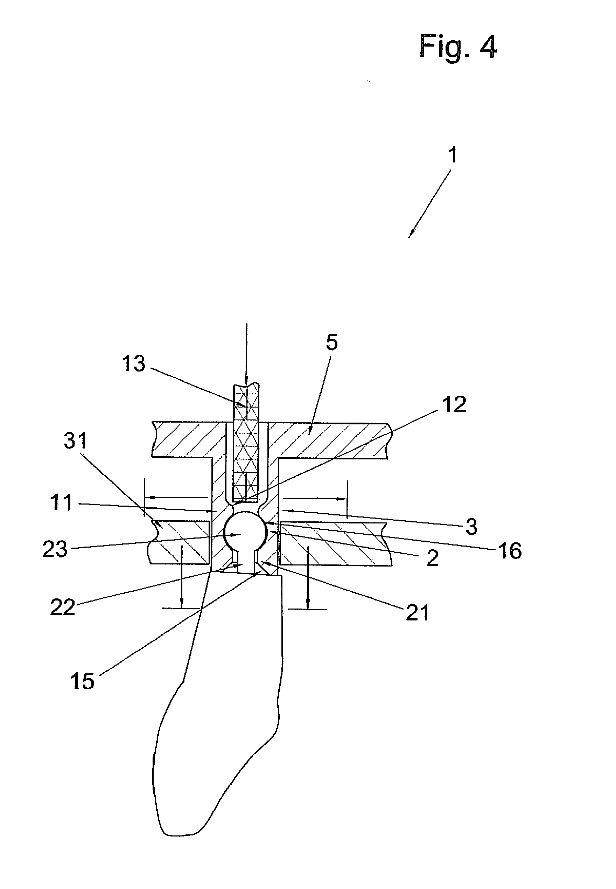

Insbesondere den Figuren 3a, 3b und 4 kann die Funktionsweise der Halteleiste 31 entnommen werden. Die Halteleiste 31 ist zunächst an die Kontur der Trägerplatte 5 und der Schale 2 angepasst. Des Weiteren besteht die Halteleiste 31 aus zwei senkrecht zueinander verlaufenden Schenkeln 33 und 34. In den ersten Schenkel 33 sind eine Vielzahl von Öffnungen 32 eingearbeitet; der erste Schenkel 33 verläuft im montierten Zustand parallel zu dem Boden 6 der Trägerplatte 5. Der zweite Schenkel 34 ist parallel zu dem jeweiligen Zapfen 11 ausgerichtet.

Der Innendurchmesser der Öffnungen 32 entspricht im Wesentlichen dem Außendurchmesser der Zapfen 11, so dass die Halteleiste 31 auf die Zapfen 11 der Trägerplatte 5 aufgeschoben werden können und jeden Zapfen 11 vollständig umschließen, Im vorderen Bereich des Unterkiefers ist oftmals nicht genügend Material vorhanden, um eine vollständige Umschließung des Kopfes 23 durch den Zapfen 11 zu erreichen, so dass in diesen Aufnahmekammern 12 der Kopf 23 lediglich teilweise umgriffen ist. Bereits bei einem Umschließungswinkel von 180° oder mehr ist jedoch die zuverlässige Fixierung des Lehrzahnes 4 in dem Zapfen 11 erreicht.

Wird die Halteleiste 31 in Richtung der Trägerplatte 5 verschoben, dient der Boden 6 als Anschlagfläche für die Halteleiste 31, so dass diese in der Ausgangsposition fixiert ist. In diesem Zustand ragen die Zapfen 11 aus der Halteleiste 31 hinaus, denn die Halteleiste 31 ist unterhalb der Aufnahmekammer 12, insbesondere unterhalb der Aufnahmetasche 16 angeordnet. Folglich können beim Einführen des Lehrzahns 4 die Seitenwände der Zapfen 11 elastisch nach außen verformt werden, um den Kopf 23 des Lehrzahns 4 in die Aufnahmetasche 16 einstecken zu können.

Wenn sämtliche Lehrzähne 4 in den jeweiligen Zapfen 11 eingesteckt sind, wird gemäß Figur 4 die Halteleiste 31 in Richtung des Lehrzahns 4 axial verschoben, so dass die Halteleiste 31 nunmehr von der Trägerplatte 5 beabstandet ist und etwa in der gleichen Ebene wie die Aufnahmetasche 16 verläuft. Da die Zapfen 11 von der Öffnung 32 der Halteleiste 31 vollständig umschlossen sind, können sich die Zapfen 11 nicht mehr elastisch verformen, wodurch sichergestellt ist, dass selbst bei einer hohen Kraft, die auf die Lehrzähne 4 einwirkt, diese in der Aufnahmetasche 16 zuverlässig gehalten sind.

Zwischen der Außenseite der Zapfen 11 und einer mit der Bezugsziffer 8 gekennzeichneten Außenwand des Bogens 7 ist ein Zwischenraum 9 vorgesehen, in den die Halteleiste 31 bereichsweise eintaucht. Der Zwischenraum 9 ist erforderlich, um die Bewegungsfreiheit der Halteleiste 31 zu erreichen. Die Halteleiste 31 ist relativ zu der Trägerplatte 5 in einem Verstellweg von einem bis drei Millimeter bewegbar.

## Patentansprüche

1. Übungsmodell (1) zur Erlernung von zahnmedizinischen Fertigkeiten,
- mit einer an einem Phantomkopf oder Artikulator befestigbaren Schale (2), in die eine Vielzahl von Durchgangsöffnungen (3) eingearbeitet ist,
- mit einem oder mehreren Lehrzähnen (4), der oder die einzeln in der Durchgangsöffnung (3) der Schale (2) angeordnet ist bzw. sind,
- und mit einer Trägerplatte (5), die an der Schale (2) arretierbar ist und durch die der jeweilige Lehrzahn (4) an der Schale (2) lösbar fixiert ist,
wobei, an der Trägerplatte (5) mindestens ein Zapfen (11) angeformt ist, in den eine Aufnahmekammer (12) eingearbeitet ist,
und an jedem Lehrzahn (4) ein Halteglied (21) absteht, das die Durchgangsöffnung (3) der Schale (2) im montierten Zustand durchgreift,
wobei das einzelne Halteglied (21) zu einer der Aufnahmekammer (12) der Zapfen (11) fluchtend ausgerichtet und in dieser eingesteckt ist, wobei die Aufnahmekammer (12) beim Herausziehen bzw. Hereindrücken des Lehrzahns (4) elastisch verformbar ist,
**dadurch gekennzeichnet, dass** zwischen der Schale (2) und der Trägerplatte (5) eine Halteleiste (31) angeordnet ist, deren Kontur an die Konturen der Trägerplatte (5) und der Schale (2) angepasst ist und in die, vorzugsweise runde, fluchtend zu der Aufnahmekammer (12) verlaufende Öffnungen (32) eingearbeitet sind,
und dass die Halteleiste (31) zur Fixierung des jeweiligen Haltegliedes (21) der Lehrzähne (4) relativ zu der Trägerplatte (5) zwischen dieser und der Schale (2) axial verschiebbar gelagert ist,
wobei beim Verschieben der Halteleiste (31) in Richtung des Haltegliedes (21), durch die in der Halteleiste (31) eingearbeiteten Öffnungen (32), die Zapfen (11) fixiert und zusammengedrückt sind, wodurch eine lösbare Presspassung entsteht, die die Lehrzähne (4) in dem jeweiligen Zapfen (11) arretiert.

2. Übungsmodell nach Anspruch 1, **dadurch gekennzeichnet, dass** in 2. eine Wand des Zapfens (11) mindestens ein Schlitz (14) eingearbeitet ist, der senkrecht oder parallel zu der Längsachse (13) der Aufnahmekammer (12) ausgerichtet ist.

3. Übungsmodell nach Anspruch 2, **dadurch gekennzeichnet, dass** die Halteleiste (31) in ihrem Querschnitt L-förmig ausgestaltet ist, dass die Öffnungen (32) in einem Schenkel (33) eingearbeitet sind, der parallel und beabstandet zu der Schale (2) verläuft, und dass ein senkrecht dazu angebrachter Schenkel (34) der Halteleiste (31) parallel zu den Zapfen (11) der Trägerplatte (5) ausgerichtet ist.

4. Übungsmodell nach Anspruch 2 oder 3, **dadurch gekennzeichnet, dass** die Halteglieder (21) der Lehrzähne (4) aus einem Steg (22) und aus einem birnen- oder kugelförmigen Kopf (23) gebildet sind, dass der Durchmesser des Kopfes (23) größer bemessen ist als die Breite des Steges (22), dass die Aufnahmekammer (12) aus einem Einführkanal (15) und aus einer Aufnahmetasche (16) gebildet ist, deren geometrischen Abmessungen jeweils an die Durchmesser der Stege (22) und der Köpfe (23) der Halteglieder (21) angepasst sind.

5. Übungsmodell nach Anspruch 4, **dadurch gekennzeichnet, dass** der Kopf (23) größer bemessen ist als der Innendurchmesser des jeweiligen Einführkanals (15) und dass der Durchmesser der Aufnahmetasche (16) in etwa gleich groß bemessen ist wie der Kopf (23).

6. Übungsmodell nach Anspruch 5, **dadurch gekennzeichnet, dass** der Einführkanal (15) der Aufnahmekammer (12) durch das jeweilige Halteglied (21) beim Einschieben des Kopfes (23), vorzugsweise im Bereich des Schlitzes (14), elastisch nach außen verformt ist.

7. Übungsmodel nach Anspruch 6, **dadurch gekennzeichnet, dass** beim axialen Verschieben der Halteleiste (31) in Richtung der Schale (2) die Aufnahmekammern (12) der Zapfen (11) in Umfangsrichtung bereichsweise gemeinsam freigegeben sind oder dass beim axialen Verschieben der Halteleiste (31) entgegengesetzt zu der Schale (2) die Aufnahmekammer (12) elastisch derart verformt ist, dass deren Innendurchmesser verkleinert ist und zwischen der Aufnahmetasche (16) der Aufnahmekammer (12) und dem Kopf (23) des jeweiligen Lehrzahnes (4) eine lösbare Presspassung gebildet ist.

8. Übungsmodell nach einem der vorgenannten Ansprüche, **dadurch gekennzeichnet, dass** jeder der Zapfen (11) an einem der Trägerplatte (5) zugeordneten Boden (6) angeformt ist und dass der Boden (6) als Anschlagfläche für die Halteleiste (31) dient.

9. Übungsmodell nach einem der vorgenannten Ansprüche, **dadurch gekennzeichnet, dass** die Höhenabmessungen der Trägerplatte (5) und der Zapfen (11) gleich groß sind und dass die Höhenabmessung der Halteleiste (31) etwas kleiner bemessen ist als die Höhenabmessungen der Trägerplatte (5) und der Zapfen (11).

10. Übungsmodell nach Anspruch 9, **dadurch gekennzeichnet, dass** ein Verstellweg der Halteleiste (31) relativ zu der Trägerplatte (5) etwa ein bis drei Millimeter beträgt.

11. Übungsmodell nach einem der vorgenannten Ansprüche, **dadurch gekennzeichnet, dass** die Trägerplatte (5) aus einem U-förmig oder hufeneisenförmigen Bogen (7) und einem senkrecht an diesem abstehenden Boden (6) gebildet ist und dass die Zapfen (11) senkrecht an dem Boden (6) und parallel zu einer Außenwand (8) des Bogens (7) angeordnet sind.

12. Übungsmodell nach Anspruch 11, **dadurch gekennzeichnet, dass** zwischen den Zapfen (11) und der Außenwand (8) des Bogens (7) ein Zwischenraum (9) vorgesehen ist, in den die Halteleiste (31) bereichsweise oder vollständig eintaucht.

13. Übungsmodell nach Anspruch 11 oder 12, **dadurch gekennzeichnet, dass** in den Bogen (7) der Trägerplatte (5) eine oder mehrere Durchgangsöffnungen (10) eingearbeitet ist bzw. sind und dass die jeweilige Durchgangsöffnung (10) von einer Schraube (28) durchgriffen ist, die in einer Gewindebohrung eindrehbar ist, die in der Schale (2) vorgesehen ist.

14. Übungsmodell nach einem der vorgenannten Ansprüche, **dadurch gekennzeichnet, dass** die Form der Lehrzähne (4) an die menschlichen oder tierischen Formen von Zähnen angepasst ist und dass die Konturen der Durchgangsöffnungen (3) in der Schale (2) mit der jeweiligen Kontur des aufzunehmenden Lehrzahnes (4) korrespondieren.

15. Übungsmodell nach Anspruch 14, **dadurch gekennzeichnet, dass** die Lehrzähne (4) teilweise in der Durchgangsöffnung (3) der Schale (2) angeordnet sind und durch eine Innenwand der Durchgangsöffnung (3) seitlich abgestützt sind.

## Claims

1. Training model (1) for learning dental skills,
- with a shell (2) which can be fastened to a phantom head or articulator in which is incorporated a plurality of through-openings (3),
- with one or more training teeth (4) which is or are arranged individually in the through-opening (3) of the shell (2),
- and with a carrier plate (5) which can be locked to the shell (2) and through which the respective training tooth (4) is fixed detachably to the shell (2),
wherein at least one socket (11) which incorporates a receiving chamber (12) is moulded to the carrier plate (5),
and protruding from each training tooth (4) there is a retaining member (21) which grips through the through-opening (3) of the shell (2) when fitted,
wherein the individual retaining member (21) is aligned with one of the receiving chambers (12) of the sockets (11) and inserted in the latter, the receiving chamber (12) being elastically deformable when the training tooth (4) is extracted or pressed in,
**characterised in that** arranged between the shell (2) and the carrier plate (5) there is a retaining strip (31) the contour of which is matched to the contours of the carrier plate (5) and the shell (2) and into which are incorporated preferably round openings (32) running in line with the receiving chamber (12),
and **in that** the retaining strip (31) is mounted so as to be displaceable axially relative to the carrier plate (5) between the latter and the shell (2) for fixture of the respective retaining member (21) of the training teeth (4),
wherein when the retaining strip (31) is moved in the direction of the retaining member (21), the sockets (11) are fixed and compressed by the openings (32) incorporated in the retaining strip (31), through which a releasable press-fit is created which locks the training teeth (4) in the respective socket (11).

2. Training model according to claim 1, **characterised in that** incorporated in one wall of the socket (11) there is at least one slot (14) which is aligned perpendicular or parallel to the longitudinal axis (13) of the receiving chamber (12).

3. Training model according to claim 2, **characterised in that** the retaining strip (31) is L-shaped in its cross-section, **in that** the openings (32) are incorporated in one limb (33) which runs parallel to and a distance from the shell (2), and **in that** a limb (34) of the retaining strip (31) attached perpendicularly thereto is aligned parallel to the sockets (11) of the carrier plate (5).

4. Training model according to claim 2 or 3, **characterised in that** the retaining members (21) of the training teeth (4) are formed of a shank (22) and of a pear-shaped or ball-shaped head (23), **in that** the diameter of the head (23) is greater than the width of the shank (22), **in that** the receiving chamber (12) is formed of an introduction channel (15) and of a receiving pocket (16), the geometric dimensions of which are in each case matched to the diameters of the shanks (22) and of the heads (23) of the retaining members (21).

5. Training model according to claim 4, **characterised in that** the head (23) is larger than the inside diameter of the respective introduction channel (15) and **in that** the diameter of the receiving pocket (16) is roughly the same size as the head (23).

6. Training model according to claim 5, **characterised in that** the introduction channel (15) of the receiving chamber (12) is distorted elastically towards the outside by the respective retaining member (21) when the head (23) is pushed in, preferably in the area of the slot (14).

7. Training model according to claim 6, **characterised in that** when the retaining strip (31) is moved axially in the direction of the shell (2), the receiving chambers (12) of the sockets (11) are jointly exposed in areas in the circumferential direction or **in that** when the retaining strip (31) is moved axially in the opposite direction to the shell (2) the receiving chamber (12) is deformed elastically in such a way that its inside diameter is reduced and a releasable press-fit is formed between the receiving pocket (16) of the receiving chamber (12) and the head (23) of the respective training tooth (4).

8. Training model according to one of the preceding claims, **characterised in that** each of the sockets (11) is moulded on a base (6) associated with the carrier plate (5) and **in that** the base (6) serves as a stop face for the retaining strip (31).

9. Training model according to one of the preceding claims, **characterised in that** the height measurements of the carrier plate (5) and the sockets (11) are the same and **in that** the height measurement of the retaining strip (31) is somewhat smaller than the height measurements of the carrier plate (5) and the sockets (11).

10. Training model according to claim 9, **characterised in that** a range of adjustment of the retaining strip (31) relative to the carrier plate (5) is about one to three millimetres.

11. Training model according to one of the preceding claims, **characterised in that** the carrier plate (5) is formed of a U-shaped or horseshoe-shaped bow (7) and a base (6) protruding perpendicularly from the latter, and **in that** the sockets (11) are arranged perpendicularly on the base (6) and parallel to an outer wall (8) of the bow (7).

12. Training model according to claim 11, **characterised in that** provided between the sockets (11) and the outer wall (8) of the bow (7) there is an interspace (9) into which the retaining strip (31) projects in areas or completely.

13. Training model according to claim 11 or 12, **characterised in that** one or more through-openings (10) is or are incorporated in the bow (7) of the carrier plate (5) and **in that** a screw (28) which can be screwed into a threaded bore provided in the shell (2), grips through the respective through-opening (10).

14. Training model according to one of the preceding claims, **characterised in that** the shape of the training teeth (4) is matched to the human or animal shapes of teeth and **in that** the contours of the through-openings (3) in the shell (2) correspond with the respective contour of the training tooth (4) to be received.

15. Training model according to claim 14, **characterised in that** the training teeth (4) are arranged partly in the through-opening (3) of the shell (2) and supported laterally by an inner wall of the through-opening (3).

## Revendications

1. Modèle d'entraînement (1) pour acquérir des compétences en médecine dentaire,
- avec une coque (2) qui est apte à être fixée à une tête de mannequin ou à un articulateur et dans laquelle sont ménagées plusieurs ouvertures de passage (3),
- avec une ou plusieurs dents d'apprentissage (4) qui est ou qui sont disposées individuellement dans l'ouverture de passage (3) de la coque (2),
- et avec une plaque de support (5) qui est apte à être bloquée sur la coque (2) et grâce à laquelle chaque dent (4) est fixée de manière amovible à la coque (2),
étant précisé qu'il est prévu, rapportée sur la plaque de support (5), au moins une cheville (11) dans laquelle est ménagée une chambre de réception (12),
et qu'il est prévu, dépassant de chaque dent (4), un organe de fixation (21) qui traverse l'ouverture de passage (3) de la coque (2), à l'état monté,
étant précisé que l'organe de fixation individuel (21) se trouve dans l'alignement de l'une des chambres de réception (12) des chevilles (11) et est introduit dans ladite chambre, la chambre (12) étant déformable élastiquement lors de l'extraction et de l'enfoncement de la dent (4),
**caractérisé en ce qu'**il est prévu, entre la coque (2) et la plaque de support (5), une bande de fixation (31) dont le contour est adapté aux contours de la plaque de support (5) et de la coque (2) et dans laquelle sont ménagées des ouvertures (32), de préférence rondes, qui sont dans l'alignement de la chambre de réception (12),
et **en ce que** la bande de fixation (31), pour fixer chaque organe de fixation (21) des dents (4) par rapport à la plaque de support (5), est montée mobile axialement entre ladite plaque de support (5) et la coque (2),
étant précisé que lors du déplacement de la bande de fixation (31) en direction de l'organe de fixation (21), à travers les ouvertures (32) ménagées dans ladite bande de fixation (31), les chevilles (11) sont fixées et comprimées, ce qui forme un ajustement serré amovible qui bloque les dents (4) dans la cheville (11) correspondante.

2. Modèle d'entraînement selon la revendication 1, **caractérisé en ce qu'**il prévu, dans une paroi de la cheville (11), au moins une fente (14) qui est perpendiculaire ou parallèle à l'axe longitudinal (13) de la chambre de réception (12).

3. Modèle d'entraînement selon la revendication 2, **caractérisé en ce que** la bande de fixation (31) présente une forme en L, en section transversale, **en ce que** les ouvertures (32) sont ménagées dans une branche (33) qui est parallèle à la coque (2) et espacée de celle-ci, et **en ce qu'**une branche (34), perpendiculaire à la branche (33), de la bande de fixation (31) est parallèle aux chevilles (11) de la plaque de support (5).

4. Modèle d'entraînement selon la revendication 2 ou 3, **caractérisé en ce que** les organes de fixation (21) des dents (4) se composent d'une saillie (22) et d'une tête piriforme ou sphérique (23), **en ce que** le diamètre de la tête (23) est plus grand que la largeur de la saillie (22), **en ce que** la chambre de réception (12) se compose d'un conduit d'introduction (15) et d'une cavité de réception (16) dont les dimensions géométriques sont adaptées aux diamètres respectifs des saillies (22) et des têtes (23) des organes de fixation (21).

5. Modèle d'entraînement selon la revendication 4, **caractérisé en ce que** la tête (23) est plus grande que le diamètre intérieur du conduit d'introduction (15) correspondant, et **en ce que** le diamètre de la cavité de réception (16) est à peu près aussi grand que la tête (23).

6. Modèle d'entraînement selon la revendication 5, **caractérisé en ce que** lors de l'introduction de la tête (23), le conduit d'introduction (15) de la chambre de réception (12) est déformé élastiquement vers l'extérieur par l'organe de fixation (21) correspondant, de préférence dans la zone de la fente (14).

7. Modèle d'entraînement selon la revendication 6, **caractérisé en ce que** lors du déplacement axial de la bande de fixation (31) en direction de la coque (2), les chambres de réception (12) des chevilles (11) sont dégagées conjointement, par zones, dans le sens circonférentiel, ou en ce que lors du déplacement axial de la bande de fixation 31) à l'opposé de la coque (2), la chambre de réception (12) est déformée élastiquement de telle sorte que son diamètre intérieur est réduit et qu'un ajustement serré amovible est formé entre la cavité de réception (16) de la chambre (12) et la tête (23) de la dent (4) correspondante.

8. Modèle d'entraînement selon l'une des revendications précédentes, **caractérisé en ce que** chacune des chevilles (11) est rapportée sur un fond (6) associé à la plaque de support (5), et **en ce que** le fond (6) sert de surface de butée pour la bande de fixation (31).

9. Modèle d'entraînement selon l'une des revendications précédentes, **caractérisé en ce que** la hauteur de la plaque de support (5) et celle des chevilles (11) sont à peu près égales, et **en ce que** la hauteur de la bande de fixation (31) est un peu inférieure à celles de la plaque de support (5) et des chevilles (11).

10. Modèle d'entraînement selon la revendication 9, **caractérisé en ce qu'**une course de déplacement de la bande de fixation (31) par rapport à la plaque de support (5) est d'à peu près un à trois millimètres.

11. Modèle d'entraînement selon l'une des revendications précédentes, **caractérisé en ce que** la plaque de support (5) se compose d'une pièce courbe (7) en U ou en fer à cheval et d'un fond (6) qui dépasse de celle-ci, perpendiculairement, et **en ce que** les chevilles (11) sont perpendiculaires au fond (6) et parallèles à une paroi extérieure (8) de la pièce courbe (7).

12. Modèle d'entraînement selon la revendication 11, **caractérisé en ce qu'**il est prévu, entre les chevilles (11) et la paroi extérieure (8) de la pièce courbe (7), un espace intermédiaire (9) dans lequel la bande de fixation (31) entre par zones ou entièrement.

13. Modèle d'entraînement selon la revendication 11 ou 12, **caractérisé en ce qu'**une ou plusieurs ouvertures de passage (10) sont ménagées dans la pièce courbe (7) de la plaque de support (5), et **en ce que** chaque ouverture de passage (10) est traversée par une vis (28) qui est apte à être vissée dans un perçage fileté prévu dans la coque (2).

14. Modèle d'entraînement selon l'une des revendications précédentes, **caractérisé en ce que** la forme des dents (4) est adaptée à la forme des dents humaines ou animales, et **en ce que** les contours des ouvertures de passage (3) de la coque (2) correspondent au contour des dents (4) à recevoir.

15. Modèle d'entraînement selon la revendication 14, **caractérisé en ce que** les dents (4) sont disposées en partie dans l'ouverture de passage (3) de la coque (2) et sont supportées latéralement par une paroi intérieure de l'ouverture de passage (3).
